# EUROPÄISCHE PATENTSCHRIFT

(11) **EP 1 251 255 B1**
(45) Veröffentlichungstag und Bekanntmachung des Hinweises auf die Patenterteilung: **30.06.2004**
(21) Anmeldenummer: 02006962.1
(22) Anmeldetag: 27.03.2002
(51) Int. Cl.: F02B 31/08, F02M 35/10

(54) **Ansaugvorrichtung**
Intake system
Dispositif d'admission

(30) Priorität: 20.04.2001 DE 10119280
(43) Veröffentlichungstag der Anmeldung: 23.10.2002
(73) Patentinhaber: Mann + Hummel GmbH, 71638 Ludwigsburg (DE)
(72) Erfinder: Koch, Ingo, 71634 Ludwigsburg (DE); Fiesel, Robert, 88471 Laupheim (DE)
(74) Vertreter: Voth, Gerhard, Dipl.-Ing.

(56) Entgegenhaltungen:
- DE-A- 19 941 863
- US-A- 5 551 392
- US-A- 5 696 318
- PATENT ABSTRACTS OF JAPAN vol. 1999, no. 09, 30. Juli 1999 (1999-07-30) & JP 11 093678 A (TOYOTA MOTOR CORP), 6. April 1999 (1999-04-06)

## Beschreibung

### Stand der Technik

Die Erfindung betrifft eine Ansaugvorrichtung nach dem Oberbegriff des Patentanspruches 1.

Es ist aus der DE 199 41 179 eine Ansaugvorrichtung für eine Brennkraftmaschine bekannt, welche über einen Speichertank mit daran anschließenden Einlass-Verteilerkanälen verfügt. Die Einlass-Verteilerkanäle verfügen an ihrem dem Speichertank gegenüberliegend angeordneten Ende über einen Verzweigungsbereich, welcher einteilig mit dem Einlass-Verteilerkanal ausgeführt ist. Der Verzweigungsbereich teilt den Querschnitt des Einlass-Verteilerkanals in zwei voneinander getrennte Strömungsquerschnitte auf. An die Einlass-Verteilerkanäle schließt ein Zwischenflansch, welcher direkt mit einem Zylinderkopf verbunden ist, als separates Bauteil an. In dem Zwischenflansch wird die Trennung der Strömungsquerschnitte fortgeführt. Zur Erzeugung von definierten Wirbelströmungen in einer Brennkammer der Brennkraftmaschine ist in einem der Strömungsquerschnitte eine Klappe angeordnet. Wenn die Klappe den Strömungsquerschnitt verschließt, strömt die Luft nur durch den unverschlossenen Strömungsquerschnitt in die Brennkammer und erzeugt dadurch eine Verwirbelung. Ist die Klappe geöffnet, so strömt die Luft durch beide Strömungsquerschnitte in die Brennkammer ein und erzeugt eine andere Verwirbelung.

Nachteilig bei dieser Ausführung ist die komplizierte Herstellung der Ansaugvorrichtung mit den Verzweigungsbereichen in den Einlass-Verteilerkanälen. Zum Herstellen dieser Einlasskanäle sind aufwendige Kerne bzw. komplizierte Halbschalen erforderlich, welche die Kontur der Verzweigungsbereiche darstellen. Dies ist teuer und aufwendig.

Die Aufgabe der Erfindung besteht darin, eine preiswerte und einfach herstellbare Ansaugvorrichtung zu schaffen. Diese Aufgabe wird durch die Merkmale des Patentanspruches 1 gelöst.

### Vorteile der Erfindung

Die erfindungsgemäße Ansaugvorrichtung für eine Brennkraftmaschine weist einen Luftsammler, Saugkanäle und einen Zylinderkopfflansch auf. Diese Ansaugvorrichtung kann z.B. durch ein einteiliges Bauteil, welches insbesondere im Kemausschmelzverfahren oder Aluminiumdruckguß hergestellt ist oder durch ein mehrteilig ausgeführtes Bauteil gebildet sein. Der Luftsammler ist einerseits korrespondierend mit der die Brennkraftmaschine umgebenden Atmosphäre und andererseits mit den Saugkanälen verbunden. Hierbei können zwischen dem Luftsammler und der Atmosphäre diverse Bauteile, welche die Luft z.B. vorbehandeln wie ein Luftfilter oder zur Kühlung von Komponenten nutzen, angeordnet sein. Die Saugkanäle, welche von dem Luftsammler ausgehen, sind mit dem Zylinderkopfflansch verbunden, wodurch die Luft aus dem Luftsammler der Brennkraftmaschine zugeführt werden kann. Jedem Saugkanal ist eine in der Brennkraftmaschine angeordnete Brennkammer zugeordnet, welche die zugeführte Luft zur Verbrennung benötigt. Der Zylinderkopfflansch ist an der Brennkraftmaschine im Bereich des Zylinderkopfes insbesondere mit Schrauben verbunden. Im Bereich des Zylinderkopfflansches ist ein Mittel zur Trennung des Saugkanals in einen ersten Strömungsquerschnitt und einen zweiten Strömungsquerschnitt angeordnet. Durch das Mittel zur Trennung des Saugkanals in einen ersten und einen zweiten Strömungsquerschnitt wird die Luft, welche in einem Saugkanal von dem Luftsammler zur Brennkraftmaschine strömt, in zwei Teilströme aufgeteilt. Die Strömungsquerschnitte können beliebige z.B. rechteckige oder ovale Konturen aufweisen.

Der erste Strömungsquerschnitt ist mit einem Verschlusselement öffen- und verschließbar ausgeführt. Hierzu kann das Verschlusselement z.B. an dem Zylinderkopfflansch oder an dem Zylinderkopf angeordnet sein und mit dem ersten Strömungsquerschnitt kommunizieren. Das Verschlusselement kann z.B. als Klappe oder als Drehschieber ausgebildet sein.

Wenn das Verschlusselement den ersten Strömungsquerschnitt verschließt, kann nur der Teil der Luftströmung in die Brennkammer gelangen, welcher durch den zweiten Strömungsquerschnitt hindurchströmt. Wenn das Verschlusselement geöffnet ist, kann die Luft aus dem Saugkanal durch beide Strömungsquerschnitte in die Brennkammer einströmen, wodurch die Luft die Brennkammer in einer anderen Weise auffüllt. Das Mittel zur Trennung des Saugkanals in zwei voneinander getrennte Strömungsquerschnitte ist durch einen Einsatz gebildet, welcher in einer Aufnahme in dem Zylinderkopfflansch angeordnet ist und an seinem Umfang über seine ganze Höhe von der Aufnahme vollständig umgeben ist. Dieser Einsatz kann eine beliebige Außenkontur aufweisen. Hierbei kann er z.B. rechteckig ausgeführt sein. Der Einsatz verfügt über eine Trennwand, welche den ersten Strömungsquerschnitt von dem zweiten Strömungsquerschnitt trennt. Diese Trennwand weist mindestens die gleiche Höhe wie der Umfang des Einsatzes auf. Jedem Saugkanal ist eine Aufnahme für einen separaten Einsatz zugeordnet.

Vor der Montage der Ansaugvorrichtung an die Brennkraftmaschine werden die Einsätze in die Aufnahme eingelegt. Hierzu sind keine besonderen Befestigungselemente zur Fixierung des Einsatzes in der Aufnahme erforderlich. Eine Verwendung von Befestigungselementen wie z.B. Schrauben kann jedoch bei besonderen Ausführungen sinnvoll sein, um den Einsatz in der Aufnahme zu fixieren. Die Ansaugvorrichtung wird mit ihrem Zylinderkopfflansch direkt ohne Zwischenbauteile dichtend an dem Zylinderkopf fixiert, wobei selbstverständlich ein Dichtungselement zwischen dem Zylinderkopfflansch und dem Zylinderkopf vorgesehen sein kann. Da keine Zwischenbauteile wie z.B. Flansche zwisehen dem Zylinderkopf und dem Zylinderkopfflansch eingeklemmt werden müssen, können die Befestigungselemente kürzer ausgeführt werden, wodurch die Montage vereinfacht wird. Da der Zylinderkopfflansch sowohl in seinem Randbereich, als auch zwischen den Saugkanälen dichtend mit dem Zylinderkopf verbunden ist, muss der Einsatz gegenüber der Aufnahme nicht abgedichtet werden. Es ist ausreichend, wenn der Einsatz plan auf der Aufnahme aufliegt. Bei anderen Ausbildungen kann auch ein Dichtungssteg an dem Einsatz angeordnet sein und auf der Aufnahme aufliegen bzw. In die Aufnahme eingepresst werden. Es ist für die Funktion der Ansaugvorrichtung unerheblich, ob zwischen dem Einsatz und seiner Aufnahme ein geringer Leckluftstrom vorhanden ist oder nicht.

Eine besondere Variante der Erfindung sieht vor, dass mindestens zwei dichtend miteinander verbundene Halbschalen den Luftsammler, die Saugkanäle und den Zylinderkopfflansch bilden. Die Halbschalen bestehen vorzugsweise aus einem thermoplastischen Kunststoff, wobei glasfaserverstärkte Kunststoffe höheren Belastungen ausgesetzt werden können. Die Halbschalen können bei besonderen Ausführungen unter Verwendung einer Dichtung mechanisch durch z.B. Schrauben oder Klammern verbunden werden. Bei anderen Ausführungen sind die Halbschalen z.B. verklebt oder verschweißt. Die erste Halbschale bildet das Oberteil der Ansaugvorrichtung, wobei durch die erste Halbschale die Oberseite des Luftsammlers und die Oberseite der Saugkanäle gebildet wird. Die zweite Halbschale bildet das Unterteil der Ansaugvorrichtung, wobei die Unterseite des Luftsammlers, die Unterseite der Saugkanäle sowie der Zylinderkopfflansch gebildet wird. Durch die Verwendung von zwei Halbschalen kann die Ansaugvorrichtung einfach und preiswert hergestellt werden. Die beiden Halbschalen sind ebenfalls einfach herstellbar, da alle Konturen unter Verwendung einfacher Kerne entformt werden können.

Gemäß einer Weiterbildung der Erfindung ragt die Trennwand über den Einsatz hinaus bis in den Saugkanal hinein. Hierbei wird die Luftströmung bereits im Saugkanal aufgeteilt, wodurch eine frühere und somit bessere Trennung der beiden Teilströme erzielt wird. Die zweite Halbschale ist konstruktiv unverändert, wodurch die einfache Herstellung und Entformung erhalten bleibt.

Es ist vorteilhaft, dass die Trennwand stromaufwärts durch einen sich verjüngenden Querschnitt strömungsoptimiert ausgebildet ist. Durch den sich verjüngenden Querschnitt erfolgt eine sanfte Aufteilung der Luftströmung in die beiden Teilströme. Die Luftströmung bildet bei der Aufteilung nur sehr geringe Turbulenzen aus, wodurch die Strömung der Teilströme optimiert ist und der Brennkraftmaschine möglichst viel Luft zugeführt werden kann.

Eine weitere Ausgestaltung der Erfindung sieht vor, dass das Verschlusselement in dem Einsatz angeordnet ist. Hierbei kann das Verschlusselement, welches z.B. als Drehschieber ausgebildet ist, vor der Montage der Ansaugvorrichtung an die Brennkraftmaschine optimal auf den ersten Strömungsquerschnitt abgestimmt werden, wodurch dieser optimal verschlossen werden kann.

Gemäß einer weiteren Ausgestaltung der Erfindung ist das Verschlusselement eine Drehklappe, welche mittig auf einer Welle angeordnet ist. Hierbei können die Verschlusselemente aller Saugkanäle auf einer einzigen Welle angeordnet sein, wodurch alle Verschlusselemente gleichzeitig ihre Stellung ändern. Somit ist gewährleistet, dass die Betriebsbedingungen aller Brennkammern sich entsprechen und keine ungleichmäßige Lastverteilung erfolgt.

Eine Weiterbildung der Erfindung sieht vor, dass jedes Verschlusselement in jedem Einsatz über eine eigene Welle verfügt, wobei die einzelnen Wellen mit einer einzigen Bewegungseinheit verbunden sind. Hierbei weisen die einzelnen Wellen eine Wellenlänge auf, welche nur geringfügig länger ist, als der erste Strömungsquerschnitt. Dadurch kann sich die Welle in sich nicht verdrehen. Alle Wellenenden sind mit der einzigen Bewegungseinheit verbunden, wodurch alle Verschlusselemente synchron bewegt werden und somit wieder für alle Brennkammern die selben Bedingungen geschaffen werden.

Es ist vorteilhaft, dass der Einsatz elliptisch und die Strömungsquerschnitte kreisförmig ausgebildet sind. Dadurch können die ersten und zweiten Strömungsquerschnitte kreisförmig ausgebildet sein und der Einsatz benötigt nur eine Aufnahme, welche nur geringfügig größer ist, als die Durchmesser der Strömungsquerschnitte. Des weiteren können kreisförmige Verschlusselemente die ersten Strömungsquerschnitte vorteilhafter verschließen, wodurch eine bessere Dichtheit und somit Trennung der beiden Teilströme voneinander erreicht wird.

Bei einer vorteilhaften Ausbildung der Erfindung ist der Einsatz mit dem Verschlusselement in Montagespritztechnik hergestellt. Hierbei wird zuerst die Außenform des Einsatzes mit der Trennwand mit einem thermoplastischen Kunststoff erzeugt. In die durch Abkühlung erstarrte Außenform wird dann die Klappe eingespritzt, wobei die Außenform einen Teil der Spritzgussform für die Klappe bildet. Die Klappe passt sich optimal an die Außenform an und gleicht so alle Toleranzen aus. Beim Erkalten der Klappe zieht sich der Kunststoff etwas zusammen, wodurch die Klappe beweglich wird. Die Klappe kann bei einer ersten Ausführung auf eine Welle aus Metall aufgespritzt werden, wobei die Welle in die Außenform eingebracht wird, bevor die Klappe gespritzt wird. Bei einer zweiten Ausführung wird die Welle einteilig mit der Klappe ausgeführt, wodurch die Klappe und die Welle in einem Arbeitsgang erzeugt werden. Hierbei sind Wellenstummel an die Klappe angeformt, welche in der Außenform gelagert sind. Die Beweglichkeit der Wellenstummel ist, wie oben beschrieben, durch die Schwindung des Werkstoffes der Wellenstummel gewährleistet. Durch montagegespritzte Einsätze können geringste Leckagen bei einfacher Herstellung realisiert werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: eine Ansaugvorrichtung in perspektivischer Darstellung,
- Figur 2: ein Einsatz in perspektivischer Darstellung,
- Figur 3: einen Ausschnitt aus der Ansaugvorrichtung gemäß Figur 1 und
- Figur 4: eine schematische Darstellung einer Ansaugvorrichtung.

### Beschreibung der Ausführungsbeispiele

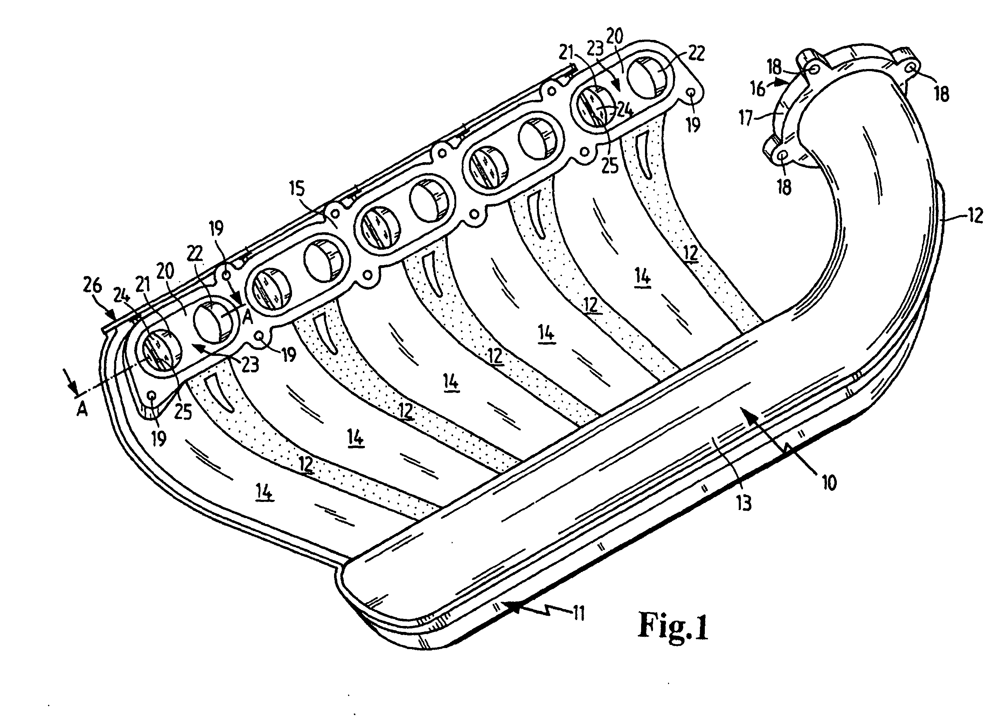

In Figur 1 ist eine Ansaugvorrichtung für eine Brennkraftmaschine in perspektivischer Darstellung abgebildet. Die Ansaugvorrichtung wird durch eine untere Halbschale 10 und eine obere Halbschale 11 gebildet. Die beiden Halbschalen 10, 11 bestehen aus einem glasfaserverstärktem Polyamid, wobei die Halbschalen 10, 11 mir einer umlaufenden Schweißnaht 12 miteinander dichtend verschweißt sind. Die beiden Halbschalen 10, 11 bilden gemeinsam einen Luftsammler 13 und Saugkanäle 14, wobei die Saugkanäle 14 von dem länglich ausgebildeten Luftsammler 13 aus zu einem Zylinderkopfflansch 15 verlaufen. Zwischen den Saukanälen 14 sind ebenfalls Schweißnähte 12 angeordnet, welche die Saugkanäle .14 in ihrer Längsrichtung dichtend voneinander trennen. Der Zylinderkopfflansch 15 wird ausschließlich von der unteren Halbschale 10 gebildet. Beide Halbschalen 10,11 sind im Kunststoffspritzgussverfahren hergestellt, wobei sie derart konstruiert sind, dass die Entformung der gespritzten Halbschalen 10, 11 ohne Hinterschneidungen und dem damit verbundenen Aufwand erfolgen kann.

Der Luftsammler 13 verfügt über einen Einlass 16, durch welchen Luft aus der Atmosphäre in die Ansaugvorrichtung gesaugt werden kann. Da es nachteilig ist, die Luft direkt neben der Brennkraftmaschine anzusaugen, kann der Einlass 16 mit seinem Flansch 17 an eine Luftleitung (nicht dargestellt) angeschlossen werden. Zur Fixierung der Luftleitung (nicht dargestellt) an dem Flansch 17 sind vier gleichmäßig verteilte Flanschbohrungen 18 vorgesehen, durch welche Schrauben (nicht dargestellt) hindurch gesteckt und mit einer Mutter (nicht dargestellt) gesichert werden können. Alternativ hierzu können jedoch auch Schrauben verwendet werden, welche ihr Gewinde selbst formen. Weiterhin können Schrauben in Gewindeeinsätze eingeschraubt werden. Dadurch kann eine Schraubensicherung mit der Mutter enfallen.

Der Zylinderkopfflansch 15 verfügt über Bohrungen 19, durch welche Befestigungsmittel (nicht dargestellt) hindurch gesteckt und an einem Zylinderkopf (nicht dargestellt) befestigt werden können. Hierbei können jedoch auch die oben beschriebenen Alternativen benutzt werden. In dem Zylinderkopfflansch 15 ist pro Saugkanal 14 ein Einsatz 20 angeordnet. Dieser Einsatz 20 ist oval ausgebildet und wird an seinem Unfang von dem Zylinderkopfflansch 15 umschlossen. In dem Einsatz 20 sind ein erster Strömungsquerschnitt 21 und ein zweiter Strömungsquerschnitt 22 angeordnet. Die beiden kreisförmigen Strömungsquerschnitte 21, 22 sind durch eine Trennwand 23 voneinander getrennt. Der erste Strömungsquerschnitt 21 ist mit einer Klappe 24 verschließbar ausgeführt. Die Klappe 24 ist mittig auf einer Welle 25 angeordnet. Die Welle 25 ragt aus dem Einsatz 20 und dem Zylinderkopfflansch 15 heraus, wobei sie mit einer Bewegungseinheit 26 verbunden ist.

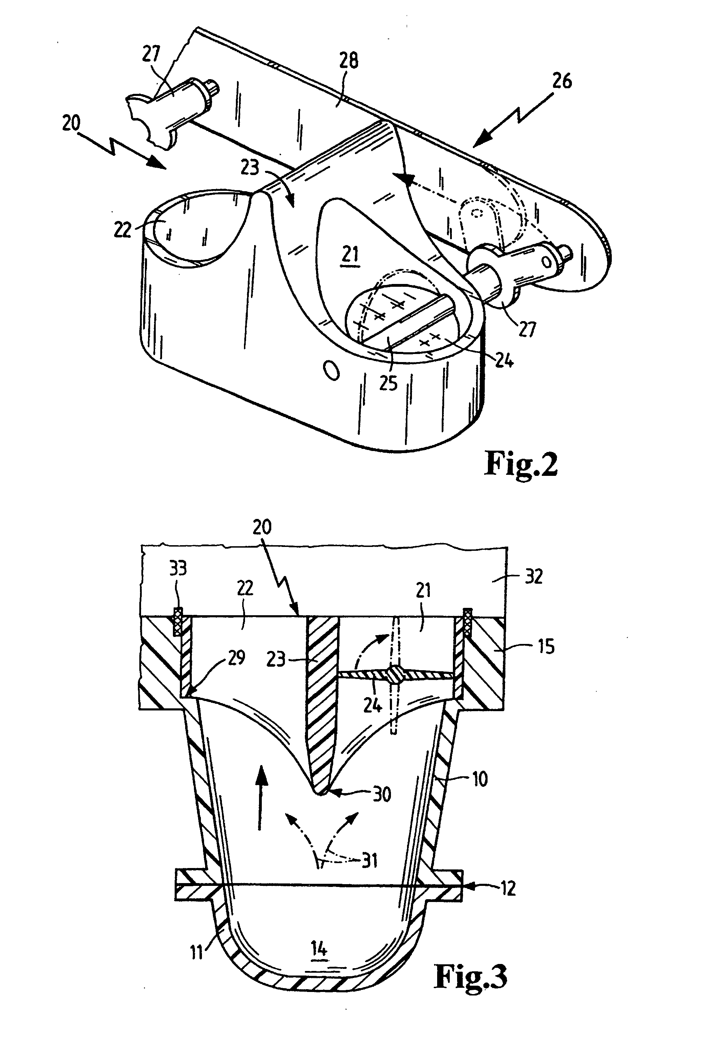

In Figur 2 ist ein Einsatz 20 mit seiner Bewegungseinheit 26 in perspektivischer Darstellung abgebildet, wobei die Klappe 24 den ersten Strömungsquerschnitt verschließt. Der Figur 1 entsprechende Bauteile sind mit gleichen Bezugszeichen versehen. Der Einsatz 20 besteht aus Kunststoff und ist in Montagespritzgusstechnik hergestellt. Die Welle 25 ist außerhalb des Einsatzes 20 fest mit einem Hebel 27 verbunden. Dieser Hebel 27 bildet mit einer Stange 28 die Bewegungseinheit 26. Hierzu ist der Hebel 27 derart mit der Stange 28 verbunden, dass die Bewegung der Stange in eine rotatorische Bewegungen des Hebels 27 bzw. der Klappe 24 umgewandelt wird. Wird die Stange 28 in oder entgegen der Pfeilrichtung bewegt, so ändert sich die Stellung der Klappe 24. Bei dem dargestellten Einsatz 20 befindet sich die Klappe 24 in der geschlossen Stellung. Durch bewegen der Stange in Pfeilrichtung wird die Klappe 24 in eine geöffnete Stellung bewegt. Je nachdem, wie weit die Stange bewegt wird, öffnet die Klappe 24 den ersten Strömungsquerschnitt 21 vollständig oder nur teilweise. Bei vollständig geöffneter Klappe 24 verbleibt die Klappe 24 und die Welle 25 in dem ersten Strömungsquerschnitt 21. Bei dieser Ausführung sind die Wellen 25 aller Einsätze mit der selben Stange 28 verbunden, wodurch alle Klappen 24 synchron bewegt werden. Hierbei sind die Klappen 24 derart an der Stange 28 auszurichten, dass alle Klappen 24 den gleichen Neigungswinkel aufweisen. Dadurch schließen bzw. öffnen alle Klappen 24 gleichzeitig. Die Klappen 24 der einzelnen Einsätze 20 können jedoch auch mit separaten, untereinander nicht verbundenen Bewegungseinheiten 26 bewegt werden.

In Figur 3 ist ein Ausschnitt aus der Ansaugvorrichtung entlang der Schnittlinie A-A gemäß Figur 1 dargestellt. Der Figur 1 entsprechende Bauteile sind mit gleichen Bezugszeichen versehen. Der Schnitt A-A verläuft mittig durch den Einsatz 20 und den ihn umgebenden Zylinderkopfflansch 15. Bei dieser Darstellung ist die Schweißnaht 12, welche die obere Halbschale 11 mit der unteren Halbschale 10 verbindet, deutlich zu erkennen.

Diese Schweißnaht 12 kann z.B. durch Vibrationsschweißen erzeugt sein, wobei selbstverständlich Schweißansätze (nicht dargestellt) zum Aufschmelzen vorgesehen sein können.

Der Einsatz 20 ist in eine Aufnahme 29, welche in dem Zylinderkopfflansch 15 angeordnet ist, eingebracht. Die Aufnahme 29 ist derart ausgebildet, dass der Einsatz 20 auf der der Brennkraftmaschine zugewandten Seite mit dem Zylinderkopfflansch 15 abschließt und nicht darüber hinaus ragt. Auf der der Brennkraftmaschine gegenüberliegenden Seite ragt die Trennwand 23 bis in den Saugkanal 14 hinein und teilt so den Luftstrom auf. Die Trennwand 23 verfügt über einen sich entgegen der Strömungsrichtung verjüngenden Querschnitt 30, wodurch eine turbulenzarme Strömungsaufteilung in zwei Teilströme erzielt wird.

Bei geschlossener Klappe 24 kann die Luft nur in Pfeilrichtung durch den unverschlossenen zweiten Querschnitt 22 strömen. Zum Freigeben des ersten Strömungsquerschnittes 21 wird die Klappe 24 gemäß dem strich-punktierten Pfeil gedreht. Bei geöffneter Klappe 24 (strich-punktiert dargestellt) ist auch der erste Strömungsquerschnitt 21 durchlässig für die in Richtung Brennkraftmaschine strömende Luft. Dadurch teilt sich der Luftstrom aus dem Saugkanal 14 gemäß den strich-punktierten Pfeilen 31 auf.

Der Zylinderkopfflansch 15 ist dichtend mit einem Zylinderkopf 32 (schematisch dargestellt) einer Brennkraftmaschine verbunden. Zur dichtenden Verbindung ist eine Dichtung 33 vorgesehen, welche direkt um den Einsatz 29 herum verläuft und somit jeden Einsatz 20 gegenüber dem Zylinderkopf 32 abdichtet. Bei alternativen Ausgestaltung kann auch jeder Strömungsquerschnitt 21, 22 über eine eigene umlaufende Dichtung 33 verfügen, wobei die beiden Dichtungen 33 auch miteinander verbunden sein können.

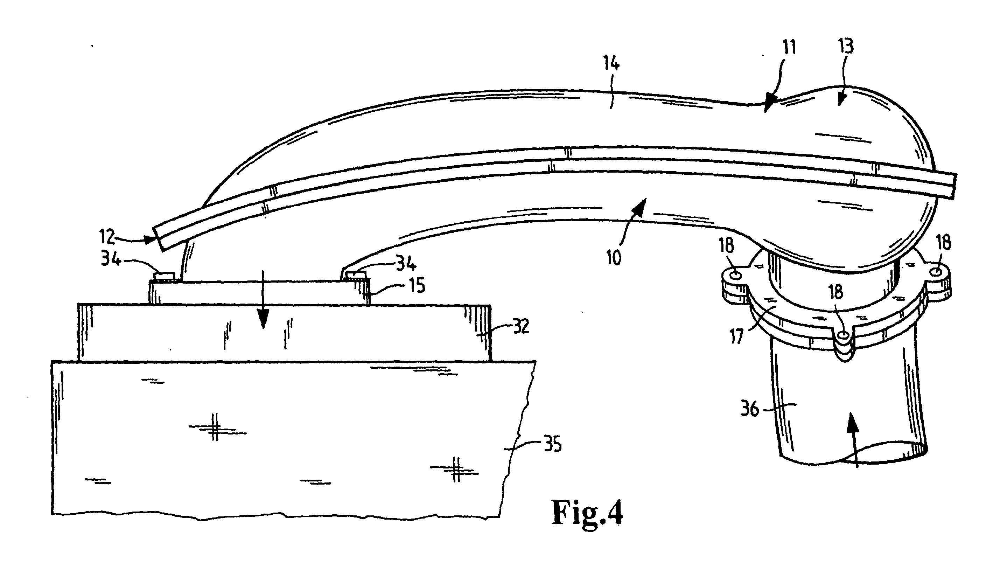

In Figur 4 ist die Ansaugvorrichtung in schematischer Darstellung abgebildet. Der Figur 1 entsprechende Bauteile sind mit gleichen Bezugszeichen versehen. Die Ansaugvorrichtung ist mit Schrauben 34 mit dem Zylinderkopf 32 einer Brennkraftmaschine 35 verbunden. Einlassseitig der Ansaugvorrichtung ist an den Flansch 17 eine Luftleitung 36 angeflanscht. In der Luftleitung 36 wird die Luft von der Atmosphäre zu der Ansaugvorrichtung transportiert.

## Patentansprüche

1. Ansaugvorrichtung für eine Brennkraftmaschine, aufweisend einen Luftsammler (13), Saugkanäle (14) und einen Zylinderkopfflansch (15),
- wobei der Luftsammler (13) einerseits korrespondierend mit der, die Brennkraftmaschine umgebenden Atmosphäre und andererseits mit den Saugkanälen (14) verbunden ist,
- wobei die Saugkanäle (14) mit dem Zylinderkopfflansch (15) verbunden sind und jedem Saugkanal (14) eine Brennkammer in der Brennkraftmaschine zugeordnet ist,
- wobei der Zylinderkopfflansch (15) mit der Brennkraftmaschine verbunden ist,
- wobei im Bereich des Zylinderkopfflansches (15) ein Mittel zur Trennung des Saugkanals (14) in einen ersten Strömungsquerschnitt (21) und einen zweiten Strömungsquerschnitt (22) angeordnet ist,
- wobei der erste Strömungsquerschnitt (21) mit einem Verschlusselement +18 öffen- und verschließbar ist,
**dadurch gekennzeichnet, dass**
das Mittel zur Trennung des Saugkanals (14) in zwei voneinander getrennte Strömungsquerschnitte (21), (22) durch einen Einsatz (20) gebildet ist, welcher in einer Aufnahme (29) in dem Zylinderkopfflansch (15) angeordnet ist, wobei der Einsatz über eine Trennwand (23) verfügt, welche den ersten Strömungsquerschnitt (21) von dem zweiten Strömungsquerschnitt (22) trennt.

2. Ansaugvorrichtung nach Anspruch 1, **dadurch gekennzeichnet, dass** zwei dichtend miteinander verbundene Halbschalen (10, 11) den Luftsammler (13), die Saugkanäle (14) und den Zylinderkopfflansch (15) bilden.

3. Ansaugvorrichtung nach Anspruch 1 oder 2, **dadurch gekennzeichnet, dass** die Trennwand (23) bis in den Saugkanal (14) hinein ragt.

4. Ansaugvorrichtung nach einem der vorangehenden Ansprüche, **dadurch gekennzeichnet, dass** die Trennwand (23) stromaufwärts durch einen sich verjüngenden Querschnitt (30) strömungsoptimiert ausgebildet ist.

5. Ansaugvorrichtung nach einem der vorangehenden Ansprüche, **dadurch gekennzeichnet, dass** das Verschlusselement in dem Einsatz (20) angeordnet ist.

6. Ansaugvorrichtung nach Anspruch 5, **dadurch gekennzeichnet, dass** das Verschlusselement eine Drehlappe (24) ist, welche auf einer Welle (25) angeordnet ist.

7. Ansaugsystem nach Anspruch 6, **dadurch gekennzeichnet, dass** die Wellen (25) der Einsätze (20) jedes Saugkanals (14) mit einer einzigen Bewegungseinheit (26) verbunden sind.

8. Ansaugsystem nach einem auf Anspruch 4 rückbezogenen Anspruch, **dadurch gekennzeichnet, dass** der Einsatz (20) elliptisch ausgebildet ist und die Strömungsquerschnitte (21), (22) kreisförmig ausgebildet sind.

9. Ansaugvorrichtung nach einem der vorangehenden Ansprüche, **dadurch gekennzeichnet,** der Einsatz (20) mit dem Verschlusselement in Montagespritztechnik hergestellt ist.

## Claims

1. Induction apparatus for an internal combustion engine, including an air collector (13), intake ducts (14) and a cylinder head flange (15),
- wherein the air collector (13), at the one end, communicates correspondingly with the atmosphere surrounding the internal combustion engine, and at the other end communicates with the intake ducts (14),
- wherein the intake ducts (14) are connected to the cylinder head flange (15) and each intake duct (14) is associated with one combustion chamber in the internal combustion engine,
- wherein the cylinder head flange (15) is connected to the internal combustion engine,
- wherein a means for separating the intake duct (14) into a first flow cross-section (21) and a second flow cross-section (22) is disposed in the region of the cylinder head flange (15),
- wherein the first flow cross-section (21) is openable and closable with a closing member (24),
**characterised in that** the means for separating the intake duct (14) into two flow cross-sections (21), (22), which are separate from each other, is formed by an insert (20), which is disposed in a recess (29) in the cylinder head flange (15), wherein the insert has a separating wall (23), which separates the first flow cross-section (21) from the second flow cross-section (22).

2. Induction apparatus according to claim 1, **characterised in that** two half shells (10, 11), which are sealingly interconnected, form the air collector (13), the intake ducts (14) and the cylinder head flange (15).

3. Induction apparatus according to claim 1 or 2, **characterised in that** the separating wall (23) extends into the intake duct (14).

4. Induction apparatus according to one of the preceding claims, **characterised in that** the separating wall (23) is configured upstream by a tapering cross-section (30) so as to optimise the flow.

5. Induction apparatus according to one of the preceding claims, **characterised in that** the closing member is disposed in the insert (20).

6. Induction apparatus according to claim 5, **characterised in that** the closing member is a hinged flap (24), which is disposed on a shaft (25).

7. Induction system according to claim 6, **characterised in that** the shafts (25) of the inserts (20) of each intake duct (14) are connected to a single displacement unit (26).

8. Induction system according to a claim which is dependent on claim 4, **characterised in that** the insert (20) is elliptical and the flow cross-sections (21), (22) are circular.

9. Induction apparatus according to one of the preceding claims, **characterised in that** the insert (20) is produced with the closing member by means of an injection moulding assembly process.

## Revendications

1. Dispositif d'admission pour un moteur à combustion interne comprenant un collecteur d'air (13), des conduits d'admission (14), une bride de culasse (15), et dans lequel
- le collecteur d'air (13) est relié, d'une part, de façon appropriée, à l'atmosphère qui entoure le moteur à combustion interne et, d'autre part, aux conduits d'admission (14),
- les conduits d'admission (14) sont reliés à la bride de culasse (15) et, à chaque conduit d'admission (14), est associée une chambre de combustion située dans le moteur à combustion interne,
- la bride de culasse (15) est assemblée au moteur à combustion interne,
- dans la région de la bride de culasse (15), est disposé un moyen servant à diviser le conduit d'admission (14) en une première section d'écoulement (21) et une seconde section d'écoulement (22),
- la première section d'écoulement (21) peut être ouverte et fermée au moyen d'un élément obturateur + 18,
**caractérisé en ce que**
le moyen servant à diviser le conduit d'admission (14), en deux sections d'écoulement (21), (22) séparées l'une de l'autre, est formé par un élément rapporté (20) disposé dans un logement (29) prévu dans la bride de culasse (15), l'élément rapporté comprenant une cloison (23) qui sépare la première section d'écoulement (21) de la seconde section d'écoulement (22).

2. Dispositif d'admission selon la revendication 1,
**caractérisé en ce que**
deux demi-coquilles (10, 11) assemblées entre elles à joint étanche forment le collecteur d'air (13), les conduits d'admission (14) et la bride de culasse (15).

3. Dispositif d'admission selon la revendication 1 ou 2,
**caractérisé en ce que**
la cloison (23) se prolonge jusque dans le conduit d'admission (14).

4. Dispositif d'admission selon une des revendications précédentes,
**caractérisé en ce que**
la cloison (23) est formée, côté amont, par une section (30) qui s'amincit avec une forme optimisée pour l'écoulement.

5. Dispositif d'admission selon une des revendications précédentes,
**caractérisé en ce que**
l'élément obturateur est disposé dans l'élément rapporté (20).

6. Dispositif d'admission selon la revendication 5,
**caractérisé en ce que**
l'élément obturateur est un clapet tournant (24) disposé sur un arbre (25).

7. Dispositif d'admission selon la revendication 6,
**caractérisé en ce que**
les arbres (25) des éléments rapportés (20) de tous les conduits d'admission (14) sont reliés à une unique unité de déplacement (26).

8. Dispositif d'admission selon une revendication rattachée à la revendication 4,
**caractérisé en ce que**
l'élément rapporté (20) est de forme elliptique et les sections d'écoulement (21, 22) sont de forme circulaire.

9. Dispositif d'admission selon une des revendications précédentes,
**caractérisé en ce que**
l'élément rapporté (20) est fabriqué avec l'élément obturateur dans une technique d'injection de montage.
